Europäisches Patentamt

European Patent Office

Office européen des brevets

(11) Veröffentlichungsnummer: **0 085 964**
**A2**

## (12) EUROPÄISCHE PATENTANMELDUNG

(21) Anmeldenummer: 83101071.5

(22) Anmeldetag: 04.02.83

(51) Int. Cl.³: **B 60 R 9/08**

(30) Priorität: 04.02.82 DE 3203753
29.05.82 DE 3220417

(43) Veröffentlichungstag der Anmeldung:
17.08.83 Patentblatt 83/33

(84) Benannte Vertragsstaaten:
AT BE CH DE FR GB LI NL SE

(71) Anmelder: Schnitzler, Alois
Hummerichs Bitze 9
D-5300 Bonn 3(DE)

(72) Erfinder: Schnitzler, Rosemarie
Hummerichs Bitze 9
D-5300 Bonn 3(DE)

(74) Vertreter: Diehl, Hermann O., Dr. et al,
Diehl & Kressin Flüggenstrasse 17
D-8000 München 19(DE)

(54) Dachgepäckträger.

(57) Ein Dachgepäckträger für Fahrzeuge, insbesondere zum Transport zumindest eines Surfbretts, enthält zumindest zwei quer über das Dach verlaufende und an der Dachrinne oder den Türen befestigbare Bügel. Auf jedem der Bügel ist ein Element längs desselben verschiebbar gehaltert, welches je eine Gelenkverbindung trägt, an der ein sich über den zugehörigen Bügel erstreckendes, im wesentlichen längliches Auflageelement verschwenkbar gelagert ist. Das Auflageelement reicht seitlich an dem Fahrzeug herab, wenn das verschiebbare Element in Richtung des freien Endes des Auflageelements bis zum Rand des zugehörigen Bügels herausgeschoben ist. Zumindest eines der Auflageelemente ist im Außenbereich des Bügels arretierbar, wenn die verschiebbaren Elemente auf den Bügeln zurückgeschoben sind. Verschiedene Befestigungsglieder sichern die Ladung und den Dachgepäckträger gegen unbeabsichtigtes Öffnen und unbefugten Zugriff.

In einer besonderen Ausgestaltung des Dachgepäckträgers läßt sich dieser auch zur Herstellung eines Vorzelts verwenden, wobei die Auflageelemente in diesem Falle die Streben für das Dach bilden.

Beschreibung

Die Erfindung betrifft einen Dachgepäckträger für Fahrzeuge, insbesondere zum Transport zumindest eines Surfbretts, mit zumindest zwei quer über das Dach verlaufenden und an der Dachrinne oder den Türen befestigbaren Bügeln.

Da der Surfsport überwiegend alleine ausgeübt wird und die Mehrzahl der Bevölkerung keine Möglichkeit hat, ihr Surfbrett dauernd an einem Seegrundstück zu belassen, besteht das Problem, das Surfboard alleine vom Transportmittel, vorzugsweise einem Kraftfahrzeug, ab- bzw. aufzuladen. Diese Vorgänge sind ohne fremde Hilfe nur schwer zu bewältigen. Dies bedeutet, daß man jeweils auf die Hilfe einer zweiten Person angewiesen ist.

Der vorliegenden Erfindung liegt daher die Aufgabe zugrunde, einen Dachgepäckträger zu schaffen, bei dem ein Surfboard auch ohne fremde Hilfe von einer Person auf- und abgeladen werden kann. Diese Aufgabe wird erfindungsgemäß dadurch gelöst, daß auf jedem der Bügel ein Element längs desselben verschiebbar gehaltert ist, welches je eine Gelenkverbindung trägt bzw. im Zusammenwirken mit Elementen des Bügels eine Gelenkverbindung bildet, um die je zumindest ein sich über den zugehörigen Bügel erstreckendes, im wesentlichen längliches Auflageelement derart schwenkbar ist, daß es seitlich an dem Fahrzeug herabreicht, wenn das Element in Richtung des freien Endes des Auflageelements bis zum Rande des zugehörigen Bügels verschoben ist, und von denen zumindest eines im Außenbereich des Bügels arretierbar ist, wenn die Elemente auf den Bügeln zurückgeschoben sind. Die Auflageelemente sind vorzugsweise stabför-

- 2 -

mig ausgebildet und weisen zweckmäßigerweise eine ebene nach oben gekehrte Fläche auf. Zweckmäßigerweise sind die Auflageelemente durch zumindest eine Längsstrebe miteinander verbunden. Besonders stabil wird die Anordnung, wenn eine Längsstrebe am äußeren Rand der Auflageelemente und zumindest eine weitere Längsstrebe im Mittelbereich der Auflageelemente angebracht ist.

Das Ablegen eines auf dem Dachgepäckträger zu transportierenden Gegenstandes, insbesondere eines Surfboards, bei seitlich am Kraftfahrzeug herabreichenden Auflageelementen wird dadurch erleichtert, daß an den freien Enden derselben vertikale nach oben ragende Anlagebereiche vorgesehen sind. Im Normalfalle sind diese lediglich an den Enden der Auflageelemente angebracht. Es kann jedoch auch zweckmäßig sein, die Anlagebereiche als durchlaufende Anlageflächen auszubilden.

Gemäß einer besonders zweckmäßigen Ausführungsform der Erfindung sind die Bügel rohrförmig ausgebildet, wobei sie an ihrem oberen Bereich einen durchlaufenden Schlitz tragen, durch den zumindest die Oberkante des jeweiligen Auflageelements hinausragt. Als besonders günstig haben sich Bügel erwiesen, die in dem über das Dach verlaufenden Bereich gradlinig und zylindrisch sind sowie vorzugsweise einen Rechteckquerschnitt aufweisen, wobei der Längsschlitz jeweils an der Oberseite angebracht ist und die beiden Ränder des Längsschlitzes vorzugsweise nach innen umgebogen sind.

Bei dieser Konstruktion empfiehlt es sich besonders, daß die Auflageelemente als Stäbe mit zueinander parallelen Seitenwandungen ausgebildet sind, die benachbart zu dem einen ihrer Enden in ihrem unteren Bereich mit einer Verbreiterung versehen sind, welche verhindert, daß die Stäbe in diesem Bereich aus den Längsschlitzen nach oben herausziehbar sind. Diese Verbreiterungen bilden im Zusammenwirken mit den Rändern der Längsschlitze die Gelenkverbindungen. Zweckmäßigerweise wird die Verbreiterung von einem an der Unterseite der Stäbe befestigten Stift gebildet, dessen freie Enden seitlich über die Seitenwandungen der Stäbe beidseits vorstehen.

An dem Übergangsbereich der Bügel, an dem diese von dem gerade über das Dach verlaufenden Bereich in Richtung auf das Dach nach unten umbiegen, ist zweckmäßigerweise ein Stift vorgesehen, der die Bügel quer durchsetzt. Die Unterseiten der die Auflageelemente bildenden Stäbe gleiten auf diesem Stift eben heraus, wenn die Auflageelemente aus den Bügeln herausgezogen werden.

Im Bereich der Stifte sind des weiteren lösbare Arretiermittel vorgesehen, beispielsweise in Form von einsteckbaren Stiften oder Schrauben, die im Zusammenwirken mit den Stiften und dem an der Unterseite der Stäbe an deren entgegengesetztem Ende befindlichen Stift die Schwenkbewegung begrenzen, was dann angestrebt wird, wenn die Auflageelemente den Dachbereich eines Zeltvordaches bilden sollen.

Eine wirksame Arretierung des Dachgepäckträgers für den Fahrtzustand läßt sich zum einen dadurch erreichen, daß benachbart zu den freien Enden der Auflageelemente je eine Lasche vorgesehen ist, die bei zurückgefahrenen Elementen bis unter die Bügel herabreichen und je eine Durchgangsbohrung aufweisen. Die Durchgangsbohrungen fluchten miteinander und dienen zur Aufnahme des Mastes von dem Surfboard. Wenn der Mast durch die Bohrungen hindurchgesteckt ist, verhindert er zum einen ein unbeabsichtigtes Nachaußenschieben der Auflageelemente,
zum anderen deren Abheben nach oben. Zweckmäßigerweise ist hierbei ein Stift im Außenbereich der Bügel angebracht, auf dem ein nach innen weisender, im wesentlichen horizontaler Schlitz in den Laschen oder ein
nach außen weisender entsprechender Schlitz in den Elementen aufschiebbar ist. Die jeweils angenommenen Endlagen der Verschiebung sind hierdurch zusätzlich gesichert. In einer Weiterbildung dieser Anordnung erhält
man eine wirksame Diebstahlssicherung, indem man in der
Lasche eine Bohrung anbringt, die mit einer entsprechenden Bohrung im Bügel ausrichtbar ist, so daß durch die
beiden Bohrungen ein Bügel eines Schlosses hindurchsteckbar ist. Mittels eines mit einem Endring versehenen Stifts, der über den Endring auf den Bügel des
Schlosses aufschiebbar und durch eine Bohrung im Mast
hindurchführbar ist, läßt sich gleichzeitig der Mast
gegen ein unbeabsichtigtes Verrutschen oder gegen Diebstahl sichern.

Falls große Aufladehöhen überwunden werden müssen,
empfiehlt es sich, die Auflageelemente teleskopisch ausfahrbar zu gestalten und diese zweckmäßigerweise mit
einer Gewichtsausgleichsfeder zu versehen, welche den
Aufladevorgang unterstützt und beim Abladevorgang eine
Bremswirkung ausübt.

Eine einfache und zudem diebstahlssichere Halterung des
Surfbretts auf dem Dachgepäckträger erhält man, wenn
man in zumindest einer der Längsstreben eine Bohrung vorsieht, durch welche eine Schraube hindurchführbar ist,
die in einen in den Schwertkasten des Surfbretts einsetzbaren Bolzen einschraubbar ist. Der mit einem Kopf an einem Durchfallen durch den Schwertkasten gehinderte Bolzen weist zweckmäßigerweise einen Mehrkantquerschnitt auf, der ein Herausdrehen des Bolzens von oben verhindert. Da der Abstand zwischen dem Dach des Fahrzeuges und der Unterkante der Schraube so gering bemessen ist, daß die Schraube auch nicht aus dem Bolzen herausdrehbar ist, wenn der Dachgepäckträger in die für den Transport vorgesehene Stellung gebracht ist, wird der Bolzen im unteren Bereich so ausgebildet, daß er durch das Einschrauben der Schraube aufgespreizt wird.

Gemäß einer weiteren Alternative für die Verriegelung der Auflageelemente an den Bügeln wird die Längsstrebe, welche die freien Enden der Auflageelemente miteinander verbindet, drehbar gelagert oder mit einem drehbar gelagerten Überschubrohr versehen, wobei an den Enden dieser drehbaren Teile zumindest eine Sperrklinke befestigt ist, die lösbar in Eingriff mit einem Widerlager an dem entsprechenden Bügel bringbar ist. Ein versehentliches Verschieben der Auflageelemente oder Anheben an den freien Enden wird hier besonders wirksam verhindert, wenn die Sperrklinke in Richtung auf die Schließstellung federbelastet ist. Zur Drehung der Längsstrebe dient zumindest eine im wesentlichen senkrecht von der Längsstrebe abstehende Mittelstange, welche vorzugsweise lösbar an der Längsstrebe befestigt ist. Im Zusammenhang mit dieser Mittelstange erweist sich die vorstehend beschriebene Arretierung als besonders geeignet für Reisemobile, bei denen der Dachgepäckträger sehr hoch liegt. Diese Ausgestaltung ermöglicht des weiteren eine äußerst einfache Ausbildung eines Vorzeltes, wobei die Mittelstange als auf dem Boden aufsitzende Strebe dient. An den freien Enden der Auflageelemente und/oder an der Längsstrebe angebrachte zusätzliche Halterungen ermöglichen die Befestigung weiterer Streben zur Stabilisierung des Vorzelts.

Um des weiteren zu verhindern, daß der Dachgepäckträger mitsamt seinem Inhalt in unbefugter Weise von dem Kraftfahrzeug entfernt wird, werden die freien Enden der Bügel so ausgebildet, daß sie in eine Dachrinne des Kraftfahrzeuges einsetzbar sind, wobei Haken um die Dachrinne oder Türkante greifen, welche durch eine Schraube an dem Bügel feststellbar sind, und wobei die Schraube eine sie quer durchsetzende Bohrung erhält, in welche ein abgewinkelter steifer Bügel mit einem Ende einsteckbar ist, dessen anderes Ende durch Einschieben zwischen Tür und Türrahmen des Fahrzeuges und anschließendes Schließen der Fahrzeugtür gesichert ist.

Der Dachgepäckträger läßt sich auch zum Transport von Skiern verwenden, wenn auf den Bügeln Gelenkverbindungen tragende Elemente verwendet sind und der Abstand zwischen den Auflageelementen und den Bügeln so gewählt wird, daß zwischen ihnen Skier einklemmbar sind. Es ist des weiteren zweckmäßig, wenn die Oberseite der Auflageelemente und/oder die Innenseite der Anlagebereiche und/oder die Unterseite der Auflageelemente bzw. die Oberseite der Bügel mit einer elastisch nachgiebigen Schutzschicht versehen sind, damit die auf dem Dachgepäckträger beförderten Gegenstände nicht während des Aufladens oder während der Fahrt durch Scheuern verletzt werden. Die Anbringung von einer Polsterung an der Unterkante der Laschen verhindert eine mögliche Beschädigung der Fahrzeugseitenwand, falls der Dachgepäckträger beim Beladen überlastet wird oder falls der Abladevorgang unsachgemäß erfolgt.

Es ist des weiteren günstig, wenn an den Auflageelementen und/oder den Längsstreben eine Abdeckung angebracht ist, die starr aus elastisch nachgiebigem Material wie Hart-PVC bestehen kann und vorzugsweise lösbar befestigt ist. Bei der Verwendung des Dachgepäckträgers zum Skitransport ist auf diese Weise ein Schutz der Ski und der Bindungen möglich. Die Abdeckung kann auch als Dach eines Vorzeltes dienen, welches dadurch vervollständigt werden kann, daß man an den Auflageelementen und/oder der Längsstrecke Wandungsteile eines Vorzeltes befestigt, beispielsweise mittels Reißverschlüssen, Druckknöpfen oder Klettverschlüssen. Die Wandungsteile können auch zusammenrollbar ausgebildet sein. Gleiches gilt für die Abdeckung.

Die beiliegenden Zeichnungen eines bevorzugten Ausführungsbeispiels dienen der weiteren Erläuterung der Erfindung.

Fig. 1     zeigt eine teilgeschnittene Vertikalansicht des Dachgepäckträgers auf dem Dach eines Fahrzeuges von dessen Rückseite her gesehen im aufgeladenen Zustand;

Fig. 2     zeigt eine entsprechende Ansicht des Dachgepäckträgers von Fig.1, bei der dieser in seine Be- oder Entladestellung gebracht ist;

Fig. 3     zeigt eine teilgebrochene Draufsicht auf den Dachgepäckträger in Richtung des Pfeils III von Fig.1;

Fig. 4     zeigt in auseinandergezogener Darstellung einen aus einer Schraube und einem Bolzen bestehenden Befestigungsmechanismus für ein Surfbrett auf dem Dachgepäckträger;

Fig. 5     zeigt eine entsprechende Darstellung zu Fig.4, bei der die Elemente jedoch zusammengeschraubt sind;

Fig. 6    zeigt eine perspektivische Darstellung des bei dem Befestigungsmechanismus gemäß den Fig.4 und 5 verwendeten Bolzens;

Fig. 7    zeigt eine Detailansicht des in Fig.1 mit VII bezeichneten Bereichs zur Erläuterung eines Sicherungsmechanismus für den Dachgepäckträger;

Fig. 8    zeigt eine um 9o$^\circ$ gedrehte Draufsicht des in Fig.7 gezeigten Details in Richtung des dort mit VIII bezeichneten Pfeils;

Fig. 9    zeigt im Schnitt die Befestigung des Dachgepäckträgers auf dem Fahrzeug;

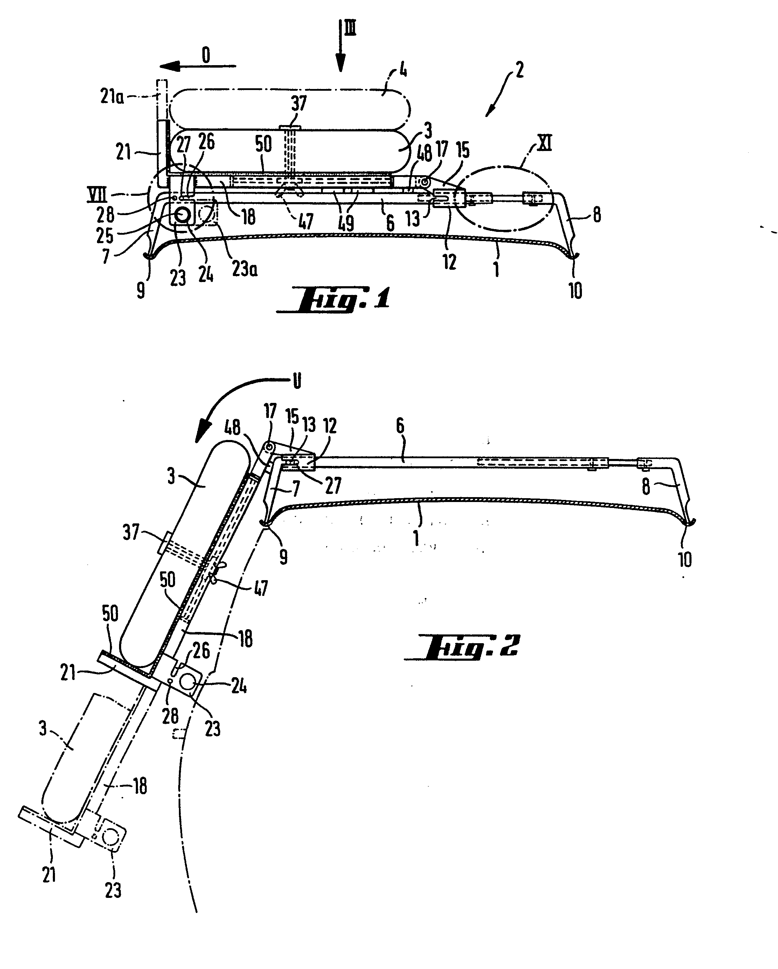

Fig.1o    zeigt eine Variante der verwendeten Auflageelemente, die in diesem Falle teleskopartig ausziehbar und mit einer Gewichtsausgleichsfeder ausgebildet sind;

Fig.11    zeigt in vergrößertem Maßstab eine Schnittansicht des in Fig.1 mit XI bezeichneten Details, das eine Anpassung des Dachgepäckträgers an verschieden breite Fahrzeuge ermöglicht;

Fig.12    zeigt eine teilgeschnittene Vertikalansicht einer weiteren Ausführungsform des Dachgepäckträgers auf dem Dach eines Fahrzeuges von der Rückseite her gesehen im aufgeladenen Zustand;

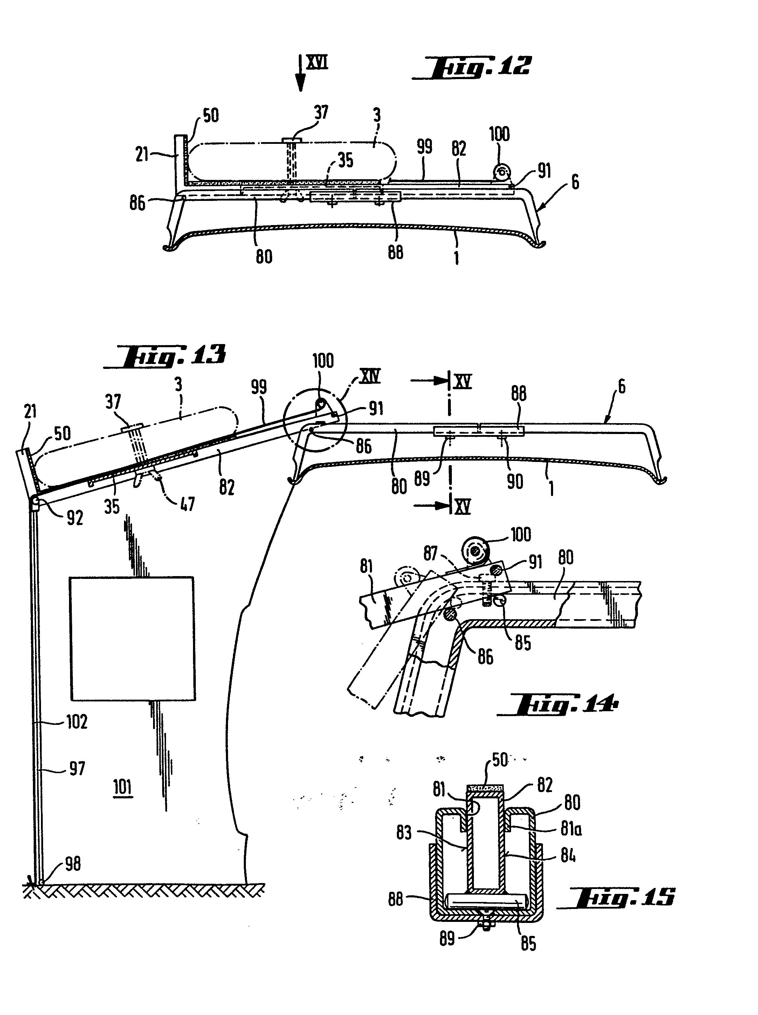

Fig.13    zeigt eine entsprechende Ansicht des Dachgepäckträgers von Fig.12, bei dem die Auflageelemente ausgezogen sind und ein Vorzelt bilden;

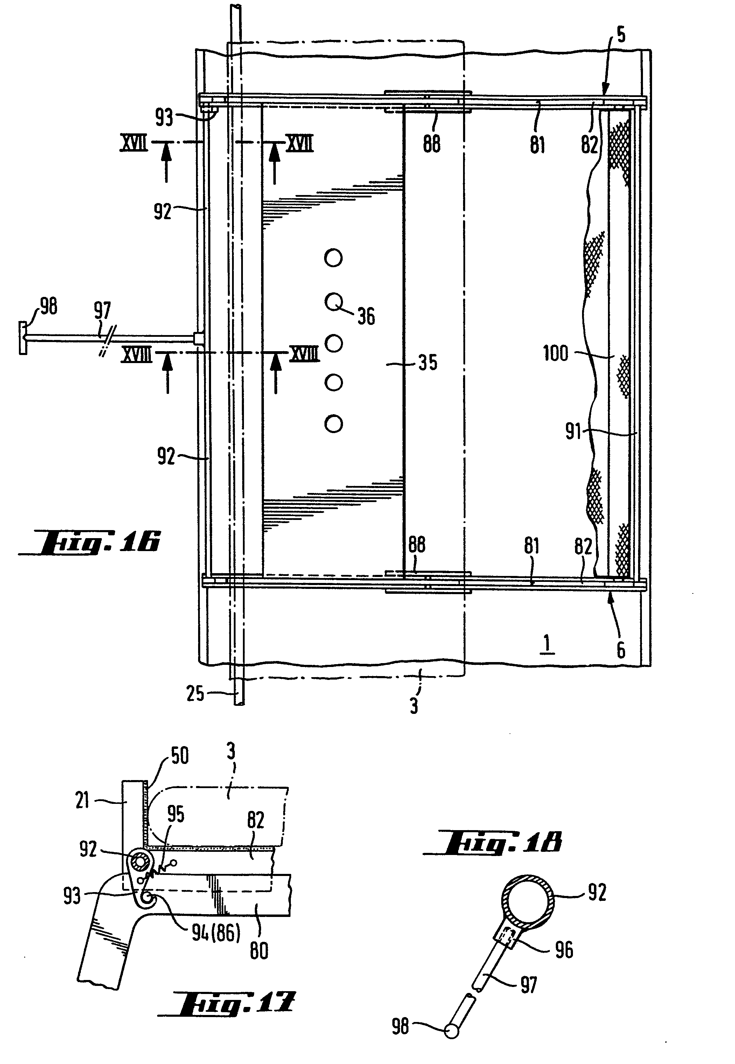

Fig.14    zeigt eine vergrößerte Teilansicht des in Fig.13 mit XIV angedeuteten Bereichs, wobei mit ausgezogenen Linien die in Fig.13 dargestellte Verwendung des Dachgepäckträgers zur
Bildung eines Vorzeltes und mit strichlierten
Linien der bei einem Abladen eines Surfbretts
eingenommene Zustand angedeutet sind;

Fig.15    zeigt im vergrößerten Maßstab einen Schnitt
         längs der Linie VI-VI von Fig.13;

Fig.16    zeigt eine teilgebrochene Draufsicht auf den
         Dachgepäckträger der Fig.12 in Richtung des
         dort angegebenen Pfeils XVI;

Fig.17    zeigt im vergrößerten Maßstab einen Schnitt
         längs der Linie XVII-XVII von Fig.16 mit Blick
         in Richtung der dort angegebenen Pfeile;

Fig.18    zeigt einen Schnitt längs der Linie XVIII-
         XVIII von Fig.16 im vergrößerten Maßstab zur
         Erläuterung der Wirkungsweise der Mittelstange.

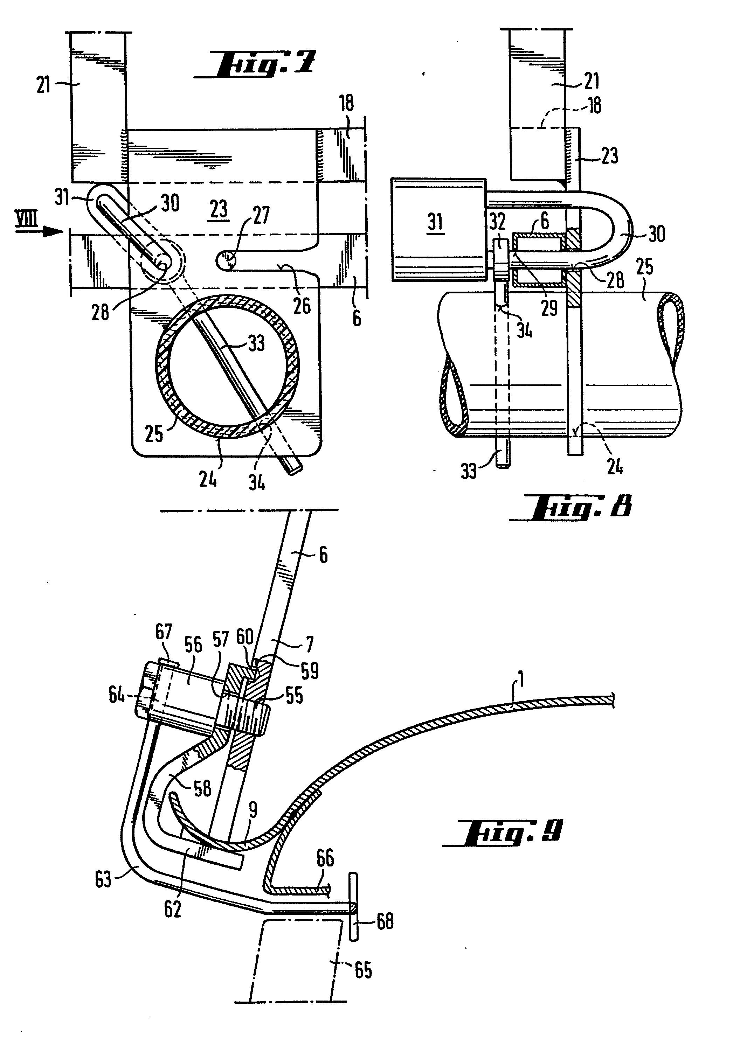

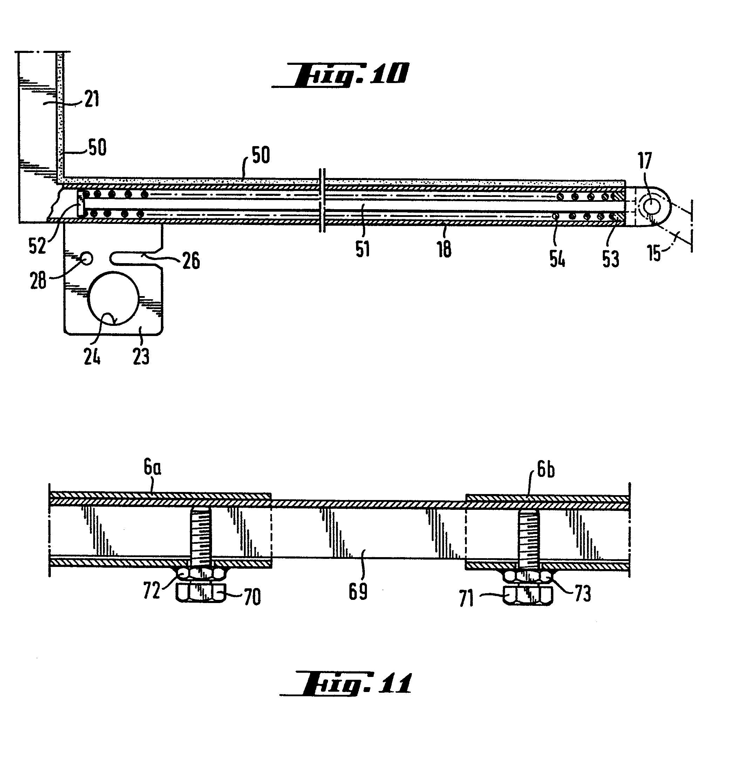

Auf dem lediglich schematisch angedeuteten Dach 1 eines
Kraftfahrzeuges ist ein Dachgepäckträger 2 befestigt,
auf dem ein Surfbrett 3 und gegebenenfalls ein weiteres
Surfbrett 4 befestigt ist. Der Dachgepäckträger 2 besteht aus zwei Bügeln 5 und 6 mit einem horizontalen,
quer über das Dach verlaufenden Bereich und nach unten
abgebogenen Endbereichen 7 und 8, mit deren freien Enden
sie in den Dachrinnen 9 und 1o des Fahrzeugdaches 1
stehen. Längs des geradlinig verlaufenden Bereichs der
Bügel 5 und 6 sind Hülsen 11 und 12 auf den Bügeln verschiebbar gehaltert. Die Hülsen enthalten einen seitlich belegenen Längsschlitz 13. An der Oberseite der
Hülsen ist ein nach oben stehender Ansatz 14, 15 angebracht, der an seinem vorderen, seitlich zum Ende der Hülsen 11 und 12 belegenen Ende ein Gelenk 16, 17 trägt, in welchem die Enden von Rohren 18 und 19, welche die Auflageelemente für das Surfbrett 3 bilden, schwenkbar gelagert sind. Die Rohre 18 und 19 erstrecken sich parallel zu den Bügeln 5 und 6 von den Hülsen 11 und 12 bis zu dem Ende des geradlinigen Bereichs der Bügel, in dem diese in die Endbereiche 7 übergehen. Die Rohre tragen an ihren äußeren, freien Enden vertikal nach oben im rechten Winkel abstehende Abbiegungen 20 und 21, welche vertikale Anlagebereiche für das Surfbrett 3 bilden. An der Rückseite der Rohre 18 und 19 benachbart zu deren äußerem Ende ist eine nach unten ragende Lasche 23 befestigt, die bei der in Fig. 1 eingenommenen Lage bis unter die Bügel 5, 6 hinabreicht. Die Laschen 23 enthalten eine Durchgangsbohrung 24, deren Durchmesser dem eines mit dem Surfbrett zu transportierenden Mastes 25 entspricht. Falls,wie durch die Strichlierung von Fig. 1 angedeutet, neben dem Surfbrett 3 noch ein darüberliegendes Surfbrett 4 transportiert werden soll, weist die Lasche 23 einen weiteren mit 23a bezeichneten Bereich auf, der eine weitere Bohrung zur Aufnahme eines zweiten Mastes besitzt, wobei selbstverständlich auch, wie durch das Bezugszeichen 21a angedeutet, die seitlichen Abbiegungen weiter nach oben hinaufreichen. Die Laschen 23 enthalten des weiteren einen parallel zu den Bügeln 5 und 6 verlaufenden Längsschlitz 26, der einen im Endbereich des geradlinigen Teils der Bügel 5 und 6 nach rückwärts abstehenden Stift 27 aufnimmt. Des weiteren ist in den Laschen 23 eine Bohrung 28 mit kleinem Durchmesser angebracht, welche bei der in Fig. 1 eingenommenen Lage des Dachgepäckträgers 1 einer Längsbohrung 29 in dem Bügel 5 oder 6 gegenüberliegt. Einzelheiten dieser Ausgestaltung sind am besten aus den Fig. 7 und 8 ersichtlich. Man erkennt dort, daß durch die Bohrungen 28 und 29, wenn der Stift 27 die Endlage in dem Längsschlitz 26 einnimmt,ein Bügel 30 eines Schlosses 31 hindurchsteckbar ist. Auf dem Bügel 30 des Schlosses 31 ist des weiteren über einen Endring 32 ein mit diesem verbundener Stift 33 gesichert, der durch eine Bohrung 34 quer den Mast 25 durchsetzt. Sobald der Bügel 30 durch die Bohrungen 28 und 29 und den Endring 32 hindurchgeführt und das Schloß 31 verschlossen ist, kann der Mast nicht. mehr unbefugt entfernt und der Dachgepäckträger nicht mehr aus der in Fig. 1 dargestellten Lage herausbewegt werden.

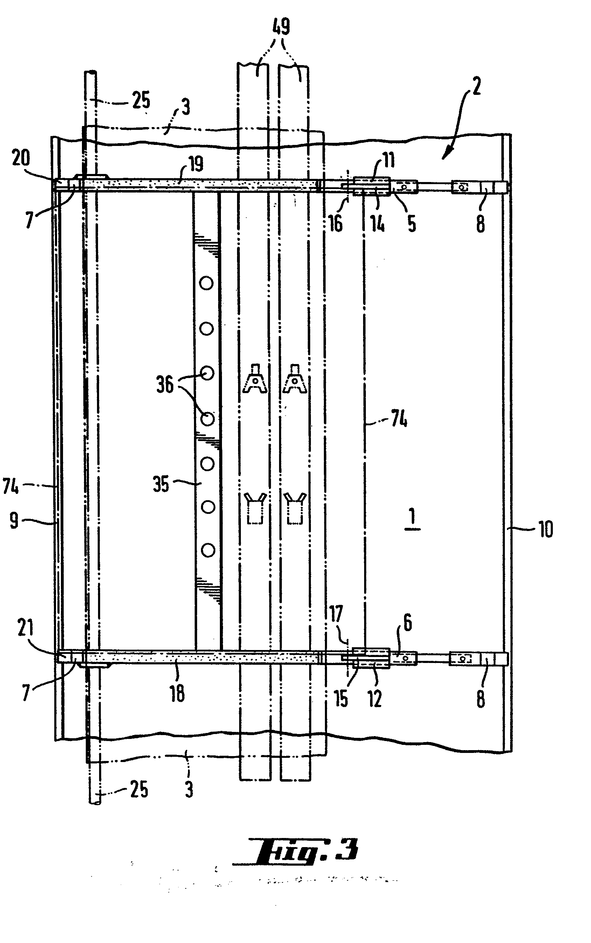

Die beiden als Auflageelemente dienenden Rohre 18 und 19 sind etwa im Bereich ihrer Mitte durch eine Längsstrebe 35 miteinander verbunden, die eine Reihe von Bohrungen 36 enthält. Diese Bohrungen erlauben zusammen mit dem in den Fig. 4 bis 6 dargestellten Befestigungsmechanismus eine diebstahlsichere Halterung des Surfbrettes 3 auf dem Dachgepäckträger 1. Der Befestigungsmechanismus besteht aus einem Bolzen 37,der in seinem oberen Bereich Abflachungen 38 enthält, welche gerade so gestaltet sind, daß der Bolzen in einem Schwertkasten 39 des Surfbretts 3,wie in Fig. 4 gezeigt, bei auf den Rohren 18 und 19 liegendem Surfbrett 3 eingeschoben werden kann. Die Abflachungen 38 verhindern ein Drehen des Bolzens 37 im Schwertkasten 39. An seinem unteren Ende enthält der Bolzen 37 Längsnuten 40, 41, 42 und 43 sowie einen Abschlußflansch 44. In seinem Inneren trägt er des weiteren ein Innengewinde 45. Ein Kopf 46 verhindert, daß der Bolzen 37 durch den Schwertkasten durchfällt. Sobald der Bolzen 37 in den Schwertkasten und durch die Bohrung 36 hindurchgeführt ist, wird eine Schraube 47 in das Innengewinde 45 des Bolzens 37 hineingedreht, wodurch sich der End-bereich des Bolzens aufweitet, so daß sich der Flansch 44 an den unteren Rändern der Bohrung 36, wie aus Fig. 5 ersichtlich, abstützt. Die Länge der Schraube 47 ist größer als die Höhe h gewählt, welche in Fig. 5 den Abstand zwischen der Oberkante des Daches 1 und der Unterkante der Schraube im eingeschraubten Zustand andeutet. Auf diese Weise ist sichergestellt, daß die Schraube 47 nur dann vollständig gelöst werden kann, wenn der Dachgepäckträger die in Fig. 2 dargestellte Lage einnimmt. Dies bedeutet, daß bei der in Fig. 1 dargestellten Lage des Dachgepäckträgers ein Lösen des Befestigungsmechanismus . für das Surfbrett 3 nicht möglich ist und dieses somit diebstahlsicher gehaltert verbleibt, bis nach Öffnen und Entfernen des Schlosses 31 und Herausnehmen des Mastes 25 die mittels der Längsstrebe 35 verbundenen Rohre 18 und 19 in Richtung des Pfeiles U von Fig. 1 gezogen werden, wobei die Hülsen 11 und 12 längs der Bügel 5 und 6 so lange verschoben werden, bis die Stifte 27 in dem Längsschlitz 13 derselben anliegen. Während dieser Bewegung können die Rohre 18 und 19 auch eine Schwenkbewegung in Richtung des Pfeiles U von Fig. 2 durchführen, bis letztlich die in Fig. 2 dargestellte Endlage eingenommen wird. In dieser Endlage kommt auch ein Gummipuffer 48 oder ein Klötzchen aus einem anderen Material zur Wirkung, der an der Unterseite der Rohre 18 und 19 benachbart zu den Gelenken 16 und 17 angebracht ist und die Rohre 18 und 19 an den Endbereich 7 der Bügel 5 bzw. 6 abstützt, so daß das untere Ende der Lasche 23 die Seitenwand des Kraftfahrzeugs möglichst nicht berührt. Um jedoch mögliche Beschädigungen bei Durchbiegungen zu verhindern, ist die Unterkante der Lasche mit einem Gummischutz versehen, der in den Zeichnungen jedoch nicht im einzelnen dargestellt ist. Wenn die in Fig. 2 dargestellte Lage eingenommen ist, kann die Schraube 47 gelöst und anschließend der Bolzen 37 herausgezogen werden, so daß das Surfbrett 3 einfach auch von einer Person abgenommen werden kann. Das Aufladen desselben geschieht in umgekehrter Reihenfolge.

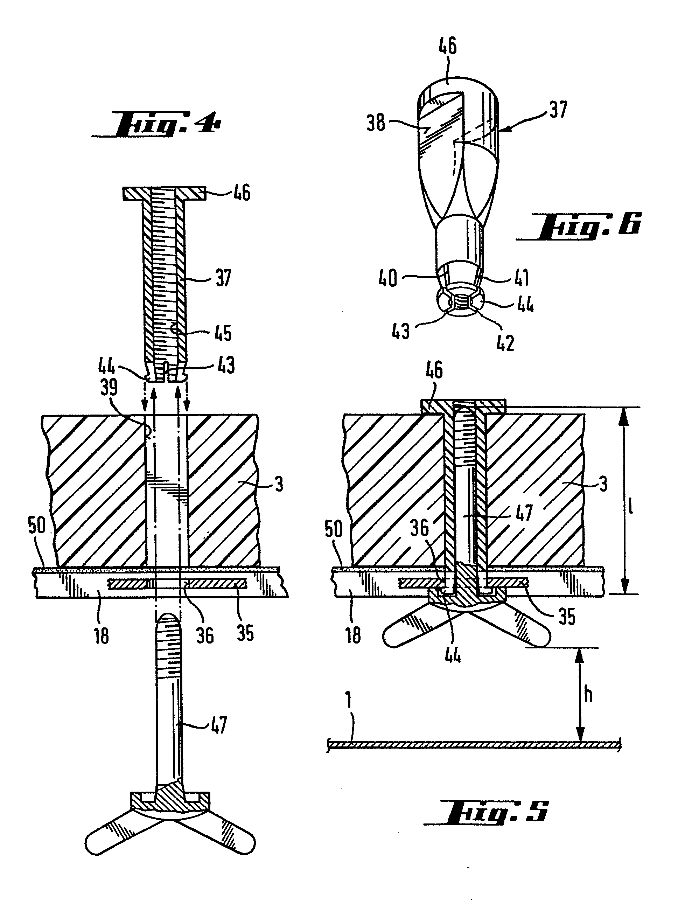

Der Zwischenraum zwischen den Bügeln 5 und 6 sowie den Rohren 18 und 19 kann, wie in den Fig. 1 und 3 angedeutet, auch zur Halterung von Skiern 49 verwendet werden, welche dazwischen einklemmbar sind. Es empfiehlt sich dabei, die Oberseite der Bügel 5 bzw. 6 und/oder die Unterseite der Rohre 18 bzw. 19 mit einer elastischen Oberfläche zu versehen, welche auch gewisse Dickenunterschiede ausgleicht. Diese elastischen Schichten sind in den Zeichnungen jedoch nicht dargestellt. Es versteht sich, daß ein Einbringen und ein Entnehmen der Skier stattfinden muß, bevor der Dachgepäckträger aus derin Fig. 1 gezeigten in die in Fig. 2 gezeigte Lage übergeführt wird, da ein Verschieben der Hülsen 11 oder 12 sonst nicht ungestört möglich ist.

Auf der Oberseite der Rohre 18 und 19 sowie auf der Innenseite der nach oben stehenden Abbiegungen 20 und 21 ist ebenfalls eine mit dem Bezugszeichen 50 angedeutete Polsterschicht angebracht, welche Beschädigungen des Surfbretts verhindert.

Es versteht sich, daß anstelle eines Surfbretts auch andere Gegenstände, wie beispielsweise eine Skibox oder eine Kofferbox befestigt werden können, welche bei Einnahme der in Fig. 2 dargestellten Lage des Dachgepäckträgers einfacher als bisher beladbar sind.

Um größere Aufladehöhen zum Beispiel bei Motorcaravans zu überbrücken, können die Rohre 18 und 19 wie, in Fig. 2 durch eine Strichpunktierung angedeutet, teleskopartig ausziehbar gestaltet sein. Die Rohre gleiten hierzu auf einer im Bereich der Gelenke 16 und 17 befestigten zylindrischen Stange 51, welche an ihrem vorderen Ende einen bis an die Wandung der Rohre heranreichenden Vorsprung 52 trägt. Am rückwärtigen Ende der Rohre 18 bzw. 19 ist ein Ring 53 eingesetzt, dessen Mittelbohrung längs der Stange 51 verschiebbar ist. Zwischen dem Vorsprung 52 und dem Ring 53 ist eine Gewichtsausgleichfeder 54 eingespannt, welche beim Übergang des Dachgepäckträgers von der in Fig.1 gezeigten in die in Fig. 2 gezeigte Lage komprimiert wird und bei dem umgekehrten Vorgang das Anheben der Last unterstützt.

In Fig. 9 ist ein zusätzliches Sicherungssystem dargestellt, welches ein unbefugtes Abnehmen des Dachgepäckträgers verhindert. Man erkennt den Endbereich 7 des Bügels 6, der sich in der Rinne 9 des Daches 1 abstützt. Etwas oberhalb des freien Endes ist eine Gewindebohrung 55 vorgesehen, in welche eine Befestigungsschraube 56 einschraubbar ist. Die Befestigungsschraube 56 reicht lose durch eine Bohrung 57 in dem oberen Ende eines Hakens 58 hindurch, der sich mit seinem oberen Ende 59 in einer oberhalb der Gewindebohrung 55 in dem Endbereich 7 angebrachten Sicke 60 abstützt. Das untere Ende 62 des Hakens 58 umgreift die Dachrinne 9, wobei es durch ein Festdrehen der Befestigungsschraube 56 gegen diese angepreßt wird. Ein unbefugtes Lösen der Befestigungsschraube 56 wird dadurch verhindert, daß ein drahtförmiger steifer abgewinkelter Bügel 63 mit seinem oberen Ende durch eine quer die Befestigungsschraube 56 durchsetzende Bohrung 64 hindurchgesteckt ist, der mit seinem nach innen ragenden freien Ende zwischen eine Türe 65 und einen Türrahmen 66 einschiebbar und darin festklemmbar ist. Der Bügel 63 enthält an seinem oberen Ende einen Kopf 67, welcher verhindert, daß der Bügel durch die Bohrung 64 mit Gewalt nach unten geschoben werden kann. Es ist ferner möglich, an dem freien in dem Bereich zwischen Türe 65 und Türrahmen 66 eingeklemmten Ende einen Anker 68 anzubringen, welcher um die Längsachse des Bügels drehbar oder verbiegbar ist und einem gewaltsamen Entfernen des Bügels 63 zusätzlich entgegenwirkt.

Fig. 11 zeigt einen Verstellmechanismus zur Anpassung des Dachgepäckträgers 1 an unterschiedlich breite Wagendächer. Der Bügel 6 ist hierbei in zwei Rohre 6a und 6b unterteilt, welche durch ein in beide freien Enden eingeschobenes U-Profilrohr 69 zusammengesteckt sind. Von der Unterseite die Rohre 6a und 6b durchsetzende Schrauben 70 bzw. 71, die jeweils in einer außen auf die Unterseite der Rohre 6a bzw. 6b aufgeschweißten Mutter 72 bzw. 73 verstellbar sind, ermöglichen eine Arretierung des U-Profilrohrs 69 in den Rohren 6a bzw. 6b, indem die Schrauben 70, 71 mit ihren Enden gegen den Boden des U-Profilrohres 69 andrücken. Durch Lösen der Schrauben 71 und 72 können die Rohre 6a und 6b aneinander angenähert oder voneinander entfernt werden.

In Fig. 3 ist des weiteren eine Abdeckung 74 angedeutet, welche massiv ausgebildet sein kann und dazu dient, im Falle eines Transports von Skiern diese zu schützen. Es ist aber auch möglich, die Abdeckung 74 aus einem elastisch nachgiebigen, gegebenenfalls stretchbaren Material zu fertigen und die Abdeckung abnehmbar zu gestalten. Des weiteren ist es möglich die verschiedenen Profile auf der der Fahrtrichtung zugekehrten Seite stromlinienförmig auszubilden, um den Windwiderstand und damit auch den Benzinverbrauch des Fahrzeuges zu senken.

Bei der in den Fig.12 bis 18 dargestellten zweiten Ausführungsform des Dachgepäckträgers besteht die Möglichkeit, mit Hilfe dessen ein seitlich zu dem Fahrzeug angebrachtes Vorzelt zu bilden. Die Bügel 5, 6 bestehen hierbei zumindest in dem gradlinig über das Dach 1 verlaufenden Bereich aus Rohren 80, die, wie aus der Schnittdarstellung von Fig.15 ersichtlich, einen Rechteckquerschnitt aufweisen und an ihrer Oberseite durchlaufende Längsschlitze 81 tragen, im Bereich derer der Rand, wie durch das Bezugszeichen 81a angedeutet, nach innen umgebogen ist, so daß er eine Führungsfläche bildet. In den Rohren 80 sind gradlinige Stäbe 82 geführt, die einen Rechteckquerschnitt aufweisen und, wie aus Fig.15 ersichtlich, hohl sein können. Die Stäbe 82, deren Höhe in etwa der lichten Höhe der Rohre 80 entspricht, haben zwei zueinander parallele Seitenwandungen 83 und 84, die parallel zu dem Längsschlitz 81 verlaufen, wobei die nach innen umgebogenen Ränder 81a eine Führung für die Stäbe 82 bilden. Die oberen Enden der Stäbe 82 stehen nach oben über die Rohre 80 vor. An den aus der Sicht von Fig.16 rechten Enden der Stäbe 82 ist, wie aus Fig.15 hervorgeht, ein Stift 85 quer zur Längsrichtung der Stäbe 82 derart angebracht, daß die freien Enden des Stifts 85 etwa senkrecht zum Längsschlitz 81 verlaufend bis nahe an die Innenwandung der Rohre 80 heranreichen, jedoch mit soviel Spiel, daß bei einem Herausziehen der Stäbe 82 aus der Sicht von Fig.16 nach links kein Verklemmen auftreten kann. Der Stift 85 verhindert, daß die Stäbe 82 an ihren aus der Sicht von Fig.16 rechten Enden aus den Längsschlitzen 81 nach oben herausgehoben werden können. An den aus der Sicht von Fig.16 linken Enden der Bügel 5,6 durchsetzt die Rohre 8o je ein Stift 86, dessen Oberkante so liegt, daß die Stäbe 82, wie in Fig.17 strichliert angedeutet, darauf mit ihrer Unterseite aufliegen und bei dem Herausziehen entlanggleiten. Über dem Stift 86, etwas nach innen gegenüber diesem verschoben, ist seitlich zu dem Längsschlitz 81 in dem Rohr 8o ein wahlweise einbringbares Arretierglied 87 vorgesehen, das von einer Schraube oder einem Bolzen gebildet sein kann. Das Arretierglied 87 verhindert, wie aus Fig.14 hervorgeht, daß die Stäbe 82 vollständig nach aussen herausgezogen werden können, wodurch die maximale Neigung der Stäbe 82 gegenüber der Horizontalen begrenzt wird. Dieser Zustand ist in Fig.14 mit ausgezogenen Linien dargestellt. In dieser Lage bilden die Stäbe 82 die seitlichen Begrenzungen für das Dach eines aus ihnen gebildeten Vorzelts, wie dies in Fig.13 dargestellt ist. Nach Herausnehmen des Arretierglieds 87 lassen sich die Stäbe 82 dagegen noch weiter nach außen ziehen, so daß, wie durch die Strichpunktierung in Fig.14 angedeutet, ein noch stärkeres Abkippen der Stäbe möglich wird, so daß diese eine Endstellung einnehmen, wie sie in Fig.2 dargestellt ist und wie man sie zum Abladen des Surfbretts benötigt.

Mit dem Bezugszeichen 88 ist eine Verbindungsschiene angedeutet, die mittels Schrauben 89 und 9o die rechte und linke Hälfte der Bügel in an sich bekannter Weise miteinander verbindet.

Die Stäbe 82 in den Bügeln 5 und 6 sind mittels zweier am Rand derselben angebrachten Längsstreben 91 und 92 miteinander verbunden, so daß ein fester, in den Längsschlitzen 81 geführter und ausziehbarer ebener Rahmen entsteht. Eine Mittelstrebe 35 dient wie bei dem ersten Ausführungsbeispiel zur Halterung von Surfbrettern.

Während die Längsstrebe 91 starr ausgebildet ist, wird die Längsstrebe 92, welche die freien Enden der Stäbe 82 verbindet, in diesen drehbar gelagert, so daß eine mit der Längsstrebe 92 starr verbundene Sperrklinke 93, die benachbart zu dem Ende der Längsstrebe 92 angebracht ist, mit dieser drehbar ist. In Fig.16 ist lediglich bei dem Bügel 5 eine derartige Sperrklinke eingezeichnet. Es versteht sich jedoch, daß eine entsprechende auch bei dem Bügel 6 angebracht sein kann. Die Sperrklinke 93 rastet, wie aus Fig.17 hervorgeht, in eine Nase 94 ein, die beispielsweise von dem nach aussen vorstehenden Ende des Stifts 86 gebildet sein kann. Eine Feder 95 trägt die Sperrklinke 93 in Sperrstellung und verhindert somit ein unbeabsichtigtes Herausrutschen der Stäbe. Im Mittelbereich der Längsstrebe 92 ist ein Hülsenstück 96 angeschweißt, das mit einem Innengewinde versehen ist, über welches eine Mittelstange 97 einschraubbar ist, die als Hebelarm zur Verdrehung der Längsstrebe 92 um ihre Längsachse und damit zur Entarretierung der Sperrklinke 93 dient. Die Mittelstange 97 trägt an ihrem Ende ein Fußteil 98, mit dem die Mittelstange 97 auf den Boden aufstellbar ist, wenn von dem Dachgepäckträger die in Fig.13 dargestellte Lage eingenommen ist. An den Stäben 82 bzw. an der Längsstrebe 92 können noch weitere Befestigungsmöglichkeiten für zusätzliche Streben vorgesehen sein, die zur Stabilisierung des Vorzeltes dienen.

Die Abdeckung des zwischen den Stäben 82 und den Längsstreben 91 und 92 gebildeten Rahmens kann mittels einer festen jedoch elastisch nachgiebigen Hart-PVC-Abdeckung erfolgen, wie sie mit 74 für die Teilabdeckung bei der in Fig.3 dargestellten Ausführungsform angedeutet ist. Es ist jedoch auch möglich, eine Planenabdeckung 99 zu verwenden, die bei Nichtbedarf auf einer Rolle 1oo aufgewickelt sein kann. Die Seitenwandungen des Vorzelts, die mit 1o1, 1o2 angedeutet sind, werden in bekannter Weise an den Stäben 82 bzw. der Längsstrebe 92 befestigt.

# DIEHL & KRESSIN

PATENTANWÄLTE · EUROPEAN PATENT ATTORNEYS

Zugelassen bei den deutschen und europäischen Patentbehörden

Flüggenstraße 17 · D-8000 München 19

**0085964**

4. Februar 1983    D/m
Sch 1792-EP

Alois Schnitzler

Hummerichs Bitze 9

5300 Bonn 3

Dachgepäckträger

P a t e n t a n s p r ü c h e

1.    Dachgepäckträger für Fahrzeuge, insbesondere zum Transport zumindest eines Surfbretts, mit zumindest zwei quer über das Dach verlaufenden und an der Dachrinne oder den Türen befestigbaren Bügeln,
d a d u r c h   g e k e n n z e i c h n e t ,
daß auf jedem Bügel (5, 6) ein Element (11, 121; 85) längs desselben verschiebbar gehaltert ist, welches je eine Gelenkverbindung bildet, um die je zumindest ein sich über den zugehörigen Bügel (5, 6) erstreckendes, im wesentlichen längliches Auflageelement (18, 19, 82) derart schwenkbar ist, daß es seitlich an dem Fahrzeug herabreicht, wenn das Element (11, 12; 85) in Richtung des freien Endes des Auflageelements (18, 19, 82) gegen den Rand des zugehörigen Bügels (5, 6) verschoben ist, und von denen zumindest eines im Außenbereich des Bügels (5, 6) arretierbar ist, wenn die Elemente (11, 12, 85) auf den Bügeln (5, 6) zurückgeschoben sind.

2. Dachgepäckträger nach Anspruch 1, dadurch gekennzeichnet, daß die Auflageelemente (18, 19) durch zumindest eine Längsstrebe (35) miteinander verbunden sind, und/oder daß an den freien Enden der Auflageelemente (18, 19) vertikale, nach oben ragende Anlagebereiche (20, 21) vorgesehen sind.

3. Dachgepäckträger nach einem der vorstehenden Ansprüche, dadurch gekennzeichnet, daß die Bügel (5, 6) rohrförmig ausgebildet sind und an ihrem oberen Bereich einen durchlaufenden Schlitz (81) tragen, durch den zumindest die Oberseite des jeweiligen Auflageelements (82) hinausragt.

4. Dachgepäckträger nach Anspruch 3, dadurch gekennzeichnet, daß die Auflageelemente als Stäbe (82) mit zueinander parallelen Seitenwandungen (83, 89) ausgebildet sind, die benachbart zu dem einen ihrer Enden in ihrem unteren Bereich mit einer Verbreiterung versehen sind, welche verhindert, daß die Stäbe in diesem Bereich aus den Schlitzen (81) herausziehbar sind, und die im Zusammenwirken mit den Rändern derselben die Gelenkverbindung bildet.

5. Dachgepäckträger nach Anspruch 3 oder 4, dadurch gekennzeichnet, daß an dem Übergangsbereich der Bügel, in dem diese in Richtung auf das Dach des Fahrzeuges nach unten umbiegen, ein dieselben quer durchsetzender Stift (86) vorgesehen ist, und daß lösbare Arretiermittel (87) vorgesehen sind, welche eine Begrenzung der Verschwenkbewegung um die Gelenkverbindung bewirken.

6.   Dachgepäckträger nach einem der vorstehenden Ansprüche, dadurch gekennzeichnet, daß benachbart zu den freien Enden der Auflageelemente je eine Lasche (23) vorgesehen ist, die bei zurückgefahrenen Elementen (11, 12) bis unter die Bügel (5, 6) herabreicht und je eine Durchgangsbohrung (24) aufweist, wobei die Durchgangsbohrungen (24) miteinander fluchten und zur Aufnahme des Mastes (25) eines Surfbretts (3) dienen.

7.   Dachgepäckträger nach einem der vorstehenden Ansprüche, dadurch gekennzeichnet, daß die Auflageelemente (18, 19) teleskopisch ausfahrbar sind und/oder eine Gewichtsausgleichsfeder (54) enthalten.

8.   Dachgepäckträger nach einem der vorstehenden Ansprüche, dadurch gekennzeichnet, daß in zumindest einer der Längsstreben (35) zumindest eine Bohrung (36) vorgesehen ist, durch welche eine Schraube (47) durchführbar ist, die sich in einen in den Schwertkasten (39) eines Surfbretts (3) einsetzbaren Bolzen (37), der vorzugsweise im unteren Bereich (44) durch Einschrauben der Schraube (47) aufspreizbar ist, einschrauben läßt, wobei der Bolzen (37) einen Mehrkantquerschnitt aufweist, der ein Verdrehen desselben verhindert.

9.   Dachgepäckträger nach einem der Ansprüche 2 bis 8, dadurch gekennzeichnet, daß die Längsstrebe (92), welche die Auflageelemente (82) miteinander verbindet, drehbar gelagert ist und zumindest an einem Ende eine Sperrklinke (93) enthält, die lösbar in Eingriff mit einem Widerlager (94) an dem entsprechenden Bügel (5, 6) bringbar ist.

10. Dachgepäckträger nach Anspruch 9, dadurch gekennzeichnet, daß zur Drehung der Längsstrebe (92) zumindest eine im wesentlichen senkrecht von dieser abstehende Mittelstange (97) dient, welche vorzugsweise lösbar an der Längsstrebe befestigt ist, und daß an den freien Enden der Auflageelemente (82) und/oder der Längsstrebe (92) Halterungen für zusätzliche Streben vorgesehen sind.

11. Dachgepäckträger nach einem der vorstehenden Ansprüche 1 und 2 und 6 bis 8, dadurch gekennzeichnet, daß der Abstand zwischen den Auflageelementen (18, 19) und den Bügeln (5, 6) so gewählt ist, daß zwischen ihnen Skier (49) einklemmbar sind.

12. Dachgepäckträger nach einem der vorstehenden Ansprüche, dadurch gekennzeichnet, daß auf der Oberseite der Auflageelemente (18, 19) und/oder der Innenseite der Anlagebereiche (20, 21) und/oder der Unterseite der Auflageelemente und/oder der Oberseite der Bügel eine elastisch nachgiebige Schutzschicht (50) aufgebracht ist und/oder daß die Unterkante der Laschen (29) gepolstert ist.

13. Dachgepäckträger nach einem der vorstehenden Ansprüche, dadurch gekennzeichnet, daß an den Auflageelementen (18, 19) und/oder den Längsstreben (92) eine Abdeckung (74) angebracht ist.

14. Dachgepäckträger nach Anspruch 13, dadurch gekennzeichnet, daß die Abdeckung aus einem elastischen nachgiebigen Material oder aus Hart-PVC besteht und/oder lösbar gehaltert ist.

15. Dachgepäckträger nach einem der vorstehenden Ansprüche, dadurch gekennzeichnet, daß an den Auflageelementen (82) und/oder der Längsstrebe (92) Wandungsteile (100, 101) eines Vorzelts befestigt oder befestigbar sind.

**Fig. 1**

**Fig. 2**

**Fig. 3**

Fig. 4

Fig. 6

Fig. 5

0085964

**Fig. 7**

**Fig. 8**

**Fig. 9**

*Fig. 10*

*Fig. 11*

0085964

Fig. 12

Fig. 13

Fig. 14

Fig. 15

**Fig. 16**

**Fig. 17**

**Fig. 18**